# EUROPÄISCHE PATENTSCHRIFT

(11) **EP 2 992 189 B1**
(45) Veröffentlichungstag und Bekanntmachung des Hinweises auf die Patenterteilung: **20.12.2017**
(21) Anmeldenummer: 14711729.5
(22) Anmeldetag: 17.03.2014
(51) Int. Cl.: F01L 1/344

(54) **HYDRAULIKVENTIL UND SCHWENKMOTORVERSTELLER**
HYDRAULIC CONTROL VALVE AND VANE TYPE PHASING DEVICE
VANNE DE COMMAND HYDRAULIQUE ET DÉPHASEUR À PALETTES

(30) Priorität: 03.05.2013 DE 102013104573
(43) Veröffentlichungstag der Anmeldung: 09.03.2016
(73) Patentinhaber: Hilite Germany GmbH, 97828 Marktheidenfeld (DE)
(72) Erfinder: SCHULZE, Dietmar, 35516 Münzenberg (DE); SCHEIBE, Christian, 68163 Mannheim (DE)
(86) Internationale Anmeldenummer: PCT/EP2014/055232
(87) Internationale Veröffentlichungsnummer: WO 2014/177316

(56) Entgegenhaltungen:
- DE-A1-102010 032 251
- US-A1- 2011 132 303
- US-A1- 2012 055 427

## Beschreibung

Erfindung betrifft ein Hydraulikventil für einen Schwenkmotorversteller, das Hydraulikventil aufweisend ein Hülsenteil mit einem Längskanal, an dessen einem Ende ein Druckmittelanschluss angeordnet ist, und von dem Längskanal abgehenden Hydraulikanschlüssen und einen innerhalb des Längskanals axialverschiebbar angeordneten druckausgeglichenen Hohlkolben und einen Schwenkmotorversteller.

Aus der deutschen Patentanmeldung mit dem Aktenzeichen DE 10 2012 106 096 A1 ist ein Schwenkmotorversteller bekannt mit einem Hydraulikventil, das eine gestufte Bohrung mit von dieser abgehenden Arbeitsanschlüssen aufweist, wobei innerhalb der Bohrung ein druckausgeglichener Hohlkolben axialverschiebbar ist und mit einem ersten Außendurchmesser innerhalb eines Bohrungsabschnitt dichtend toleriert verschiebbar ist, wobei der Hohlkolben diesem ersten Außendurchmesser folgend benachbart eine Mantelfläche mit einem großen Außendurchmesser im axial Bereiche des einen Arbeitsanschlusses und eine Mantelfläche mit einen kleinen Außendurchmesser im Bereich des anderen Arbeitsanschlusses aufweist, wobei von den beiden Mantelflächen jeweils eine Zulaufkante und eine Ablaufkante abgehen, wobei die beiden Zulaufkanten voneinander hinfort weisen und die Ablaufkanten aufeinander zuweisen, so dass ein in einen Hohlraum des Hohlkolbens eingeleiteter Versorgungsdruck einerseits an einer projizierten Kreisfläche anliegt, die vom kleinen Außendurchmesser gebildet wird, sodass eine Kraft in einer Axialrichtung wirksam ist, wohingegen der Versorgungsdruck andererseits an einer projizierten Ringfläche anliegt, die sich aus dem großen Außendurchmesser abzüglich des ersten Außendurchmessers bildet, um einen Schwenkmotorversteller mit einem Hydraulikventil zu schaffen, dessen Druckmittelanschluss die beiden Arbeitsanschlüsse auf einer gemeinsamen Seite axial benachbart sind. Zur genaueren Information über die Merkmale der vorliegenden Erfindung wird ausdrücklich auf die deutsche Patentanmeldung mit dem Aktenzeichen 10 2012 106 096.7 verwiesen. Die Lehre dieser Patentanmeldung ist als Bestandteil des vorliegenden Dokuments anzusehen. Merkmale dieser Veröffentlichung sind Merkmale des vorliegenden Dokuments.

Die DE 10 2008 004 591 A1, sowie die DE 10 2010 032 251 A1 betreffen ein hydraulisches Steuerventil mit einem an dem Druckmittelanschluss integrierten Rückschlagventil.
Der Erfindung liegt die Aufgabe zugrunde, ein eingangs genanntes Hydraulikventil baulich und/oder funktional zu verbessern. Insbesondere soll eine Druckbeaufschlagung von Hydraulikanschlüssen des Hydraulikventils auch dann ermöglicht sein, wenn an dem Druckmittelanschluss kein Arbeitsdruck anliegt. Insbesondere soll ein Rotor des Schwenkmotorverstellers in einer Endlage haltbar sein, auch ohne dass an dem Druckmittelanschluss ein Arbeitsdruck anliegt. Insbesondere soll ein Rückfluss durch den Druckmittelanschluss verhindert sein. Insbesondere soll ein Druckerzeugungsbedarf reduziert sein. Insbesondere soll ein Kraftstoffverbrauch eines Kraftfahrzeugs reduziert sein. Insbesondere soll eine Verschmutzung des Hydraulikventils und/oder des Schwenkmotorverstellers verhindert werden. Insbesondere soll eine baulich kompakte Anordnung bereitgestellt werden. Insbesondere soll eine gut integrierbare Anordnung bereitgestellt werden. Insbesondere soll eine Erhöhung eines Durchflusswiderstands begrenzt sein.
Die Lösung der Aufgabe erfolgt mit einem Hydraulikventil für einen Schwenkmotorversteller, das Hydraulikventil aufweisend ein Hülsenteil mit einem Längskanal, an dessen einem Ende ein Druckmittelanschluss angeordnet ist, und von dem Längskanal abgehenden Hydraulikanschlüssen und einen innerhalb des Längskanals axialverschiebbar angeordneten druckausgeglichenen Hohlkolben, wobei das Hydraulikventil an dem Druckmittelanschluss ein Rückschlagventil aufweist.
Das Hydraulikventil kann dazu dienen, eine Verstellung eines Schwenkmotorverstellers zu steuern. Das Hydraulikventil kann einen ersten Arbeitsanschluss aufweisen. Das Hydraulikventil kann einen zweiten Arbeitsanschluss aufweisen. Das Hydraulikventil kann einen Tankanschluss aufweisen. Das Hydraulikventil kann mithilfe eines elektromagnetischen Stellglieds betätigbar sein. Das Hydraulikventil kann ein 4/2-Wege-Ventil sein. Das Hydraulikventil kann ein Proportionalventil sein. Das Hydraulikventil kann eine Längsachse aufweisen.

Das Hülsenteil kann eine hohlzylinderartige Form aufweisen. Das Hülsenteil kann eine Längsachse aufweisen. Das Hülsenteil kann eine radial innere Oberfläche aufweisen. Die radial innere Oberfläche des Hülsenteils kann den Längskanal bilden. Der Längskanal kann sich entlang der Längsachse erstrecken. Der Längskanal kann ein erstes Ende und ein zweites Ende aufweisen. Der Längskanal kann eine erste axiale Öffnung und eine zweite axiale Öffnung aufweisen. Der Druckmittelanschluss kann ein axialer Anschluss sein. Die Hydraulikanschlüsse können zu der Längsachse rechtwinklige Achsen aufweisen. Die Hydraulikanschlüsse können radiale Anschlüsse sein. Wenigstens ein Hydraulikanschluss kann ein Arbeitsanschluss sein. Ein Arbeitsanschluss kann zur Durchströmung in beide Durchflussrichtungen bestimmt sein. Wenigstens ein Hydraulikanschluss kann ein Tankablauf sein. Der Hohlkolben kann in Erstreckungsrichtung der Längsachse verschiebbar sein. Der Hohlkolben kann axiale Druckflächen aufweisen. Der Hohlkolben kann erste Druckflächen aufweisen, die zu dem ersten Ende des Längskanals hin gerichtet sind. Der Hohlkolben kann zweite Druckflächen aufweisen, die zu dem zweiten Ende des Längskanals hin gerichtet sind. Eine Flächensumme der ersten Druckflächen kann einer Flächensumme der zweiten Druckflächen zumindest annähernd entsprechen. Damit ist der Hohlkolben druckausgeglichen. Das Rückschlagventil kann an einem Ende des Längskanals angeordnet sein. Das Rückschlagventil kann an einer axialen Öffnung des Längskanals angeordnet sein.

Das Hülsenteil kann radial innenseitig einen Vorsprung aufweisen, der einen axialen Anschlag für das Rückschlagventil bildet. Das Hülsenteil kann radial innenseitig eine Ausnehmung aufweisen, die zur Befestigung des Rückschlagventils dient. Die Ausnehmung kann eine nutartige Form aufweisen. Die Ausnehmung kann eine Hinterschnittkontur des Hülsenteils bilden.

Das Rückschlagventil kann in einer Einlassrichtung öffnend und in einer Auslassrichtung schließend sein. Eine Einlassrichtung kann von außen in den Längskanal gerichtet sein. Eine Auslassrichtung kann von dem Längskanal nach außen gerichtet sein. Das Rückschlagventil kann unter Einfluss einer Druckmittelströmung selbsttätig öffenbar und/oder schließbar sein.

Das Rückschlagventil kann als an dem druckmittelanschlussseitigen Ende des Längskanals angeordneter Einsatz ausgebildet sein. Das Rückschlagventil kann im Wesentlichen radial innerhalb des Längskanals angeordnet sein. Das Rückschlagventil kann im Wesentlichen radial innerhalb des Längskanals angeordnet sein. Das Rückschlagventil kann axial über die Hülse überstehen. Das Rückschlagventil kann einen Abschnitt einer Außenkontur des Hydraulikventils bilden. Das Rückschlagventil kann mit einer radial äußeren Oberfläche an einer Oberfläche des Längskanals angeordnet sein. Das Rückschlagventil kann mit dem Hülsenteil formschlüssig verbunden sein. Das Rückschlagventil kann in das Hülsenteil eingeclipst sein. Das Rückschlagventil kann an dem Hülsenteil dichtend oder gedichtet angeordnet sein. Das Rückschlagventil kann mit dem Hülsenteil in axialer Richtung gefügt sein.

Das Rückschlagventil kann einen hülsenförmigen Träger, eine Ventilsitzplatte und wenigstens einen zwischen einer Offenstellung und einer Schließstellung verlagerbaren Sperrkörper aufweisen.

Der Träger kann eine zylinderartige Form aufweisen. Der Träger kann eine ringartige Form aufweisen. Der Träger kann eine radial innere Oberfläche aufweisen. Die radial innere Oberfläche kann strömungsgünstig ausgeführt sein. Der Träger kann eine radial äußere Oberfläche aufweisen. Die radial äußere Oberfläche kann dem Hülsenteil angepasst konturiert sein. Radial außenseitig kann der Träger eine Hinterschnittkontur aufweisen. Die Hinterschnittkontur des Trägers kann mit der korrespondierenden Hinterschnittkontur des Hülsenteils in Eingriff stehen. Die Hinterschnittkontur des Trägers kann rastnasenartig ausgeführt sein. Bei einem Fügen des Rückschlagventils mit dem Hülsenteil kann die Hinterschnittkontur des Trägers radial einfedern und mit der Hinterschnittkontur des Hülsenteils verrasten. Der Träger kann aus einem Kunststoff hergestellt sein.

Die Ventilsitzplatte kann mehrere Durchlässe aufweisen, die mithilfe des wenigstens einen Sperrkörpers in der Schließstellung schließbar sein können. Die Ventilsitzplatte kann einen Ventilsitz für den wenigstens einen Sperrkörper bilden. Die Ventilsitzplatte kann eine scheibenartige Form aufweisen. Die Ventilsitzplatte kann zwei axiale Seitenflächen aufweisen. Die Ventilsitzplatte kann mit einer axialen Seitenfläche axial an einem radial innenseitigen Vorsprung des Hülsenteils anliegen. Der Träger kann axial an einer axialen Seitenfläche der Ventilsitzplatte anliegen. Damit kann die Ventilsitzplatte axial formschlüssig gehalten sein. Die Durchlässe können als Löcher ausgeführt sein. Die Durchlässe können kreisförmig verteilt angeordnet sein. Die Durchlässe können jeweils zu einer axialen Seitenfläche hin mit einer rechtwinkligen Kante abschließen. Die Durchlässe können jeweils zu einer axialen Seitenfläche hin mit einer geneigten Kante abschließen. Die sperrkörperseitigen Abschlüsse der Durchlässe können dem wenigstens einen Sperrkörper angepasst sein. Die Ventilsitzplatte kann aus einem Metall hergestellt sein. Die Durchlässe können gestanzt sein. Die Durchlässe können gebohrt sein. Die Durchlässe können jeweils eine umlaufende Begrenzung aufweisen. An den Begrenzungen kann die Ventilsitzplatte jeweils von dem wenigstens einen Sperrkörper weg gebogen sein.

Der wenigstens eine Sperrkörper kann eine kugelartige Form aufweisen. Das Rückschlagventil kann mehrere, insbesondere drei bis sechs, kugelartig geformte Sperrkörper aufweisen. Der wenigstens eine Sperrkörper kann eine Kugel sein. Der wenigstens eine Sperrkörper kann eine scheibenartige Form aufweisen. Der wenigstens eine Sperrkörper kann eine ringscheibenartige Form aufweisen. Das Rückschlagventil kann einen einzigen scheibenartig geformten Sperrkörper aufweisen. Der wenigstens eine scheibenartig geformte Sperrkörper kann einen radial äußeren Rand aufweisen. Der radial äußeren Rand kann verrundet ausgeführt sein. Damit ist eine Verlagerung des wenigstens einen Sperrkörpers erleichtert.

Das Rückschlagventil kann einen Anschlag für den wenigstens einen Sperrkörper in Offenstellung aufweisen. Der Anschlag kann an der Ventilsitzplatte angeordnet sein. Der Anschlag kann eine den wenigstens einen Sperrkörper von radial innen her umgreifende Form aufweisen. Der Anschlag kann radial innenseitig der Sperrkörper mit der Ventilsitzplatte verbunden sein. Der Anschlag kann mit der Ventilsitzplatte kraft-, form- und/oder stoffschlüssig verbunden sein. Der Anschlag kann eine den wenigstens einen Sperrkörper von radial außen her umgreifende Form aufweisen. Der Anschlag kann radial außenseitig der Sperrkörper mit der Ventilsitzplatte verbunden sein. Der Anschlag kann mithilfe eines hülsenteilseitigen Vorsprungs gebildet sein. Der Anschlag kann mithilfe einer mit dem Hülsenteil fest verbundenen Innenhülse gebildet sein.

An dem Rückschlagventil kann ein Filter angeordnet sein. Der Filter kann eine haubenartige Form aufweisen. Damit kann der Filter bezogen auf einen Durchmesser des Längskanals große Oberfläche aufweisen. Damit ist ein Zusetzen des Filters erschwert.

Außerdem erfolgt die Lösung der der Erfindung zugrundeliegenden Aufgabe mit einem Schwenkmotorversteller mit einem Stator und einem relativ zu dem Stator zwischen einer ersten Endlage und einer zweiten Endlage verdrehbaren Rotor zum Verstellen einer Nockenwelle einer Brennkraftmaschine, wobei der Schwenkmotorversteller zum Steuern einer Verdrehung des Rotors ein derartiges Hydraulikventil aufweist.

Der Schwenkmotorversteller kann ein Nockenwellenversteller sein. Die Brennkraftmaschine kann eine Antriebswelle, wie Kurbelwelle, aufweisen. Die Brennkraftmaschine kann wenigstens eine Nockenwelle aufweisen. Die Brennkraftmaschine kann Ventile aufweisen. Die wenigstens eine Nockenwelle kann zur Betätigung der Ventile dienen. Die Brennkraftmaschine kann zum Antrieb des Kraftfahrzeugs dienen. Der Schwenkmotorversteller kann zur Anordnung in einem Ventiltrieb der Brennkraftmaschine zwischen der Antriebswelle und der wenigstens einen Nockenwelle dienen. Der Schwenkmotorversteller kann zum Verstellen einer relativen Drehlage zwischen der Antriebsswelle und der wenigstens einen Nockenwelle dienen. Der Schwenkmotorversteller kann zur Phasenverstellung der Nockenwelle dienen. Der Schwenkmotorversteller kann dazu dienen, Steuerzeiten zu verstellen. Der Schwenkmotorversteller kann zur Verstellung in Richtung früh und/oder in Richtung spät dienen. "Früh" kann bedeuten, dass Ventile der Brennkraftmaschine bezogen auf eine Drehlage der Antriebswelle früh geöffnet und/oder geschlossen werden. "Spät" kann bedeuten, dass Ventile der Brennkraftmaschine bezogen auf eine Drehlage der Antriebswelle spät geöffnet und/oder geschlossen werden. Der Schwenkmotorversteller kann eine Drehachse aufweisen, um die der Stator und der Rotor zusammen drehbar und relativ zueinander verdrehbar sind.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung ist eine Druckbeaufschlagung von Hydraulikanschlüssen des Hydraulikventils auch dann ermöglicht, wenn an dem Druckmittelanschluss kein Arbeitsdruck anliegt. Ein Rotor des Schwenkmotorverstellers ist in einer Endlage haltbar, auch ohne dass an dem Druckmittelanschluss ein Arbeitsdruck anliegt. Ein Rückfluss durch den Druckmittelanschluss ist verhindert. Ein Druckerzeugungsbedarf ist reduziert. Ein Kraftstoffverbrauch eines Kraftfahrzeugs ist reduziert. Eine Verschmutzung des Hydraulikventils und/oder des Schwenkmotorverstellers ist verhindert. Eine baulich kompakte Anordnung ist bereitgestellt. Eine gut integrierbare Anordnung ist bereitgestellt. Eine Erhöhung eines Durchflusswiderstands ist begrenzt. Das Rückschlagventil weist eine gute Reaktionsgeschwindigkeit auf. Das Rückschlagventil ist mit geringem Aufwand herstellbar.

Nachfolgend wird ein Ausführungsbeispiel der Erfindung unter Bezugnahme auf Figuren näher beschrieben. Aus dieser Beschreibung ergeben sich weitere Merkmale und Vorteile. Konkrete Merkmale dieses Ausführungsbeispiels können allgemeine Merkmale der Erfindung darstellen. Mit anderen Merkmalen verbundene Merkmale dieses Ausführungsbeispiels können auch einzelne Merkmale der Erfindung darstellen.

Es zeigen schematisch und beispielhaft:
- Fig. 1: in einer geschnittenen Darstellung einen Schwenkmotorversteller und
- Fig. 2: in einer geschnittenen Darstellung ein Hydraulikventil zum Steuern eines Schwenkmotorverstellers.

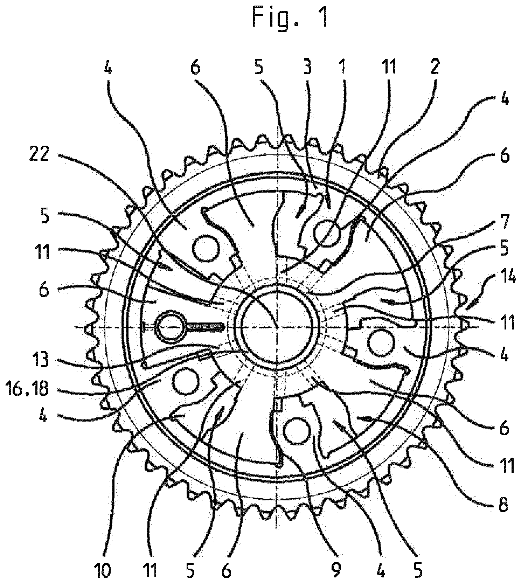

Mit einem Schwenkmotorversteller 14 gemäß Fig. 1 wird während des Betriebes eines Verbrennungsmotors die Winkellage an der Nockenwelle 18 gegenüber einem Antriebsrad 2 stufenlos verändert. Durch Verdrehen der Nockenwelle 18 werden die Öffnungs- und Schließzeitpunkte der Gaswechselventile so verschoben, dass der Verbrennungsmotor bei der jeweiligen Drehzahl seine optimale Leistung bringt. Der Schwenkmotorversteller 14 weist einen zylindrischen Stator 1 auf, der drehfest mit dem Antriebsrad 2 verbunden ist. Im Ausführungsbeispiel ist das Antriebsrad 2 ein Kettenrad, über das eine nicht näher dargestellte Kette geführt ist. Das Antriebsrad 2 kann aber auch ein Zahnriemenrad sein, über das ein Antriebsriemen als Antriebselement geführt ist. Über dieses Antriebselement und das Antriebsrad 2 ist der Stator 1 mit der Kurbelwelle antriebsverbunden.

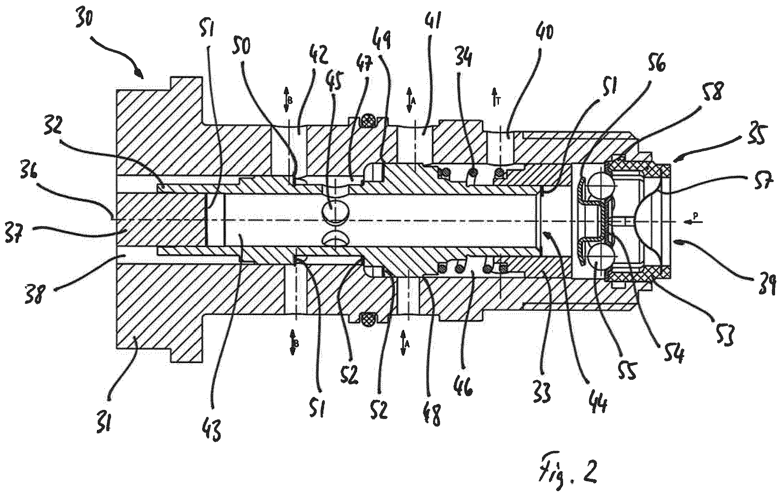

Der Stator 1 umfasst einen zylindrischen Statorgrundkörper 3, an dessen Innenseite radial nach innen in gleichen Abständen Stege 4 abstehen. Zwischen benachbarten Stegen 4 werden Zwischenräume 5 gebildet, in die, über ein in Fig. 2 näher dargestelltes zentral angeordnetes Hydraulikventil gesteuert, Druckmedium eingebracht wird. Zwischen benachbarten Stegen 4 ragen Flügel 6, die radial nach außen von einer zylindrischen Rotornabe 7 eines Rotors 8 abstehen. Diese Flügel 6 unterteilen die Zwischenräume 5 zwischen den Stegen 4 jeweils in zwei Druckkammern 9 und 10. Die eine Druckkammer 9 ist der Verstellung in Richtung "Früh" zugeordnet, wohingegen die andere Druckkammer der Verstellung in Richtung "Spät" zugeordnet ist.

Die Stege 4 liegen mit ihren Stirnseiten dichtend an der Außenmantelfläche der Rotornabe 7 an. Die Flügel 6 ihrerseits liegen mit ihren Stirnseiten dichtend an der zylindrischen Innenwand des Statorgrundkörpers 3 an.

Der Rotor 8 ist drehfest mit der Nockenwelle 18 verbunden. Um die Winkellage zwischen der Nockenwelle 18 und dem Antriebsrad 2 zu verändern, wird der Rotor 8 relativ zum Stator 1 gedreht. Hierzu wird je nach gewünschter Drehrichtung das Druckmedium in den Druckkammern 9 oder 10 unter Druck gesetzt, während die jeweils anderen Druckkammern 10 oder 9 zum Tank T hin entlastet werden. Um den Rotor 8 gegenüber dem Stator 1 entgegen dem Uhrzeigersinn in die dargestellte Stellung zu verschwenken, wird vom Hydraulikventil ein ringförmiger erster ringförmiger Rotorkanal in der Rotornabe 7 unter Druck gesetzt. Von diesem ersten Rotorkanal führen dann weitere Kanäle 11 in die Druckkammern 10. Dieser erste Rotorkanal ist dem ersten Arbeitsanschluss A zugeordnet. Um den Rotor 8 hingegen im Uhrzeigersinn zu verschwenken, wird vom Hydraulikventil ein zweiter ringförmiger Rotorkanal in der Rotornabe 7 unter Druck gesetzt, in den Kanäle 13 münden. Dieser zweite Rotorkanal ist dem zweiten Arbeitsanschluss B zugeordnet. Diese beiden Rotorkanäle sind bezüglich einer Zentralachse 22 axial beabstandet zueinander angeordnet, so dass diese in der Zeichnungsebene von Fig. 1 verdeckt hintereinander liegen.

Der Schwenkmotorversteller 14 ist auf die als Hohlrohr 16 ausgeführte gebaute Nockenwelle 18 aufgesetzt. Dazu ist der Rotor 8 auf die Nockenwelle 18 gesteckt. Das Hohlrohr 16 weist Bohrungen auf, welche die den beiden Arbeitsanschlüssen A, B zugeordneten Rotorkanäle hydraulisch mit Querbohrungen in einer Buchse des Hydraulikventils verbinden.

Somit ist der Schwenkmotorversteller 14 mittels eines Hydraulikventils schwenkbar.

Fig. 2 zeigt ein Hydraulikventil 30 zum Steuern eines Schwenkmotorverstellers, wie Schwenkmotorversteller 14 gemäß Fig. 1. Das Hydraulikventil 30 weist ein Hülsenteil 31 auf. Das Hydraulikventil 30 weist einen Hohlkolben 32 auf. Das Hydraulikventil 30 weist ein Abstützelement 33 auf. Das Hydraulikventil 30 weist eine Feder 34 auf. Das Hydraulikventil 30 weist ein Rückschlagventil 35 auf. Das Hydraulikventil 30 weist eine Längsachse 36 auf. Der Hohlkolben 32 ist relativ zu dem Hülsenteil 31 in axialer Richtung zwischen einer ersten Endlage und einer zweiten Endlage begrenzt verlagerbar. Mithilfe der Feder 34 ist der Hohlkolben 32 in Richtung der ersten Endlage beaufschlagt. Ein Stellglied 37 dient zur Beaufschlagung des Hohlkolbens 32 entgegen einer Kraft der Feder 34 in Richtung der zweiten Endlage. Das Hydraulikventil 30 weist einen Druckanschluss P, eine Tankanschluss T, einen ersten Arbeitsanschluss A und einen zweiten Arbeitsanschluss B auf. Die Arbeitsanschlüsse A, B dienen zur hydraulischen Verbindung mit Druckkammern eines Schwenkmotorverstellers, wie Druckkammern 9, 10 eines Schwenkmotorverstellers 14 gemäß Fig. 1.

Das Hülsenteil 31 weist einen zentralen Längskanal 38 auf. Der Längskanal 38 erstreckt sich entlang der Längsachse 36. Der Längskanal 38 weist eine axiale Öffnung 39 auf. Der Längskanal 38 weist einen ersten Abschnitt mit einem größeren Innendurchmesser und einen zweiten Abschnitt mit einem kleinerer Innendurchmesser auf. Der erste Abschnitt ist an der Seite des Längskanals 38 angeordnet, an der die Öffnung 39 angeordnet ist. Zwischen dem ersten Abschnitt und dem zweiten Abschnitt weist der Längskanal 38 eine Stufe auf. Der Öffnung 39 ist der Druckanschluss P des Hydraulikventils 30 zugeordnet. Das Hülsenteil 31 weist Querkanäle 40, 41, 42 auf. Die Querkanäle 40, 41 sind an dem ersten Abschnitt des Längskanals 38 angeordnet. Dem Querkanal 40 ist der Tankanschluss T des Hydraulikventils 30 zugeordnet. Dem Querkanal 41 ist der erste Arbeitsanschluss A des Hydraulikventils 30 zugeordnet. Der Querkanal 42 ist an dem zweiten Abschnitt des Längskanals 38 angeordnet. Dem Querkanal 42 ist der zweite Arbeitsanschluss B des Hydraulikventils 30 zugeordnet. Von dem Druckanschluss P aus betrachtet folgt in axialer Richtung der Tankanschluss T, gefolgt von dem ersten Arbeitsanschluss A, gefolgt von dem zweiten Arbeitsanschluss B.

Radial außenseitig ist an dem Hülsenteil 31 eine Nut zur Aufnahme einer Dichtung angeordnet. Die Nut ist in axialer Richtung zwischen den Querkanälen 41, 42 angeordnet. An dem dem Druckanschluss P zugeordneten Ende weist das Hülsenteil 31 ein Außengewinde auf. An dem gegenüberliegenden Ende weist das Hülsenteil 31 einen Kragenabschnitt auf.

Der Hohlkolben 32 ist innerhalb des Hülsenteils 31 angeordnet. Der Hohlkolben 32 weist einen zentralen Längskanal 43 auf. Der Längskanal 43 erstreckt sich entlang der Längsachse 36. Der Längskanal 43 weist eine axiale Öffnung 44 auf. Der Hohlkolben 32 weist Querkanäle, wie 45, auf. Der Hohlkolben 32 weist radial außen unterschiedliche Durchmesser auf. Der Hohlkolben 32 weist einen mehrfach gestuften Außendurchmesser auf. Der Hohlkolben 32 weist einen ersten Abschnitt auf, dessen Außendurchmesser einem Innendurchmesser des ersten Abschnitts des Längskanals 38 des Hülsenteils 31 entspricht. Der erste Abschnitt des Hohlkolbens 32 weist eine ringstegartige Form auf. Der Hohlkolben 32 ist mit seinem ersten Abschnitt an dem ersten Abschnitt des Längskanals 38 des Hülsenteils 31 dicht geführt. Der Hohlkolben 32 weist einen zweiten Abschnitt auf, dessen Außendurchmesser einem Innendurchmesser des zweiten Abschnitts des Längskanals 38 des Hülsenteils 31 entspricht. Der zweite Abschnitt des Hohlkolbens 32 weist eine ringstegartige Form auf. Der Hohlkolben 32 ist mit seinem zweiten Abschnitt an dem zweiten Abschnitt des Längskanals 38 des Hülsenteils 31 dicht geführt.

An seinem der Öffnung 44 zugewandten Ende weist der Hohlkolben 32 einen Abschnitt mit einem gegenüber dem Durchmesser des ersten Abschnitts kleineren Außendurchmesser auf. Zwischen diesen Abschnitten ist eine Stufe gebildet, die als axiale Anlagefläche für die Feder 34 dient. Zwischen diesen Abschnitten ist ein erster Ringraum 46 gebildet. Axial zwischen dem ersten Abschnitt und dem zweiten Abschnitt weist der Hohlkolben 32 einen Abschnitt mit einem gegenüber dem Durchmesser des zweiten Abschnitts kleineren Außendurchmesser auf. Zwischen dem ersten Abschnitt und dem zweiten Abschnitten ist ein zweiter Ringraum 47 gebildet, der mithilfe der Querkanäle 45 mit dem Längskanal 43 verbunden ist.

Der Hohlkolben 32 weist Steuerkanten 48, 49, 50 auf. Die Steuerkanten 48, 49 sind an dem ersten Abschnitt des Hohlkolbens 32 angeordnet. Die Steuerkanten 48, 49 sind axial voneinander weg gerichtet. Die Steuerkanten 48, 49 korrespondieren mit dem Querkanal 41 des Hülsenteils 31. Die Steuerkante 50 ist an dem zweiten Abschnitt des Hohlkolbens 32 angeordnet. Die Steuerkante 50 ist axial der Steuerkante 49 entgegen gerichtet. Die Steuerkante 50 korrespondiert mit dem Querkanal 42 des Hülsenteils 31.

Der Hohlkolben 32 weist erste Druckflächen 51 und zweite Druckflächen 52 auf. Die Druckflächen 51, 52 sind axiale gerichtete Flächen. Die ersten Druckflächen 51 und die zweiten Druckflächen 52 sind einander entgegen gerichtet. Die ersten Druckflächen 51 weisen eine Gesamtfläche auf, die einer Gesamtfläche der zweiten Druckflächen 52 entspricht. Damit ist der Hohlkolben druckausgeglichen. Eine erste Druckfläche 51 ist an dem Ende des Hohlkolbens 32 angeordnet, an dem die Öffnung 44 angeordnet ist. Eine erste Druckfläche 51 ist an dem zweiten Abschnitt des Hohlkolbens 32, an die Steuerkante 50 anschließend angeordnet und zu dem zweiten Ringraum 47 hin gerichtet. Eine erste Druckfläche 51 ist an dem geschlossenen Ende des Längskanals 43 gebildet. Eine zweite Druckfläche 52 ist an dem ersten Abschnitt des Hohlkolbens 32, an die Steuerkante 49 anschließend angeordnet und zu dem zweiten Ringraum 47 hin gerichtet. Eine zweite Druckfläche 52 ist mit einer Stufe zwischen dem ersten Abschnitt und dem zweiten Abschnitt des Hohlkolbens 32 gebildet.

Das Abstützelement 33 weist eine hülsenartige Form auf. Das Abstützelement 33 ist in dem Längskanal 38 des Hülsenteils 31 angeordnet. Das Abstützelement 33 ist an einer der Öffnung 39 des Längskanals 38 zugewandten Seite axial neben dem Querkanal 40 angeordnet. Das Abstützelement 33 ist mit dem Hülsenteil 31 fest verbunden. Das Abstützelement 33 ist in das Hülsenteil 31 eingepresst. Die Feder 34 stützt sich an dem Abstützelement 33 ab. Die Feder 34 ist eine Schraubendruckfeder. Durch eine angepasste Positionierung des Abstützelements 33 in dem Hülsenteil 31 ist eine Federvorspannung einstellbar. Der Hohlkolben 32 ist an seinem der Öffnung 44 gegenüberliegenden Ende mit dem Stellglied 37 verbunden. Das Stellglied ist ein elektromagnetischer Aktuator mit einer Stößelstange, die mit dem Hohlkolben 32 verbunden ist. Die Stößelstange ist in den Hohlkolben 32 eingepresst. Die Stößelstange verschließt den Längskanal 43 des Hohlkolbens 32 endseitig. Die Stößelstange bildet mit ihrer längskanalseitigen Stirnfläche eine erste Druckfläche 51. Mithilfe des Stellglieds 37 ist der Hohlkolben 32 entgegen einer Kraft der Feder 34 axial verlagerbar, um einen Durchfluss zwischen den Anschlüssen P, T, A, B des Hydraulikventils zu steuern.

In der ersten Endlage ist der Hohlkolben 32 bezogen auf Fig. 2 nach links verschoben. In der ersten Endlage des Hohlkolbens 32 ist ein Durchgang zwischen der Öffnung 39 und dem Querkanal 42 gebildet. In der ersten Endlage sind der Druckanschluss P und der zweite Arbeitsanschluss B des Hydraulikventils 30 miteinander fluidleitend verbunden und der zweite Arbeitsanschluss B kann hydraulisch mit Druck beaufschlagt werden. In der zweiten Endlage ist der Hohlkolben 32 bezogen auf Fig. 2 nach rechts verschoben. In der zweiten Endlage des Hohlkolbens 32 ist ein Durchgang zwischen der Öffnung 39 und dem Querkanal 41 gebildet. In der zweiten Endlage sind der Druckanschluss P und der erste Arbeitsanschluss A des Hydraulikventils 30 miteinander fluidleitend verbunden und der erste Arbeitsanschluss A kann hydraulisch mit Druck beaufschlagt werden.

Das Rückschlagventil 35 ist in der Öffnung 39 des Längskanals 38 des Hülsenteils 31 angeordnet. Das Rückschlagventil 35 dient dazu, einen Durchfluss von dem Druckanschluss P zu den Arbeitsanschlüssen A, B zu ermöglichen und einen Rückfluss von den Arbeitsanschlüssen A, B zu dem Druckanschluss P zu sperren.

Das Rückschlagventil 35 weist ein axial innenseitiges Ende und ein axial außenseitiges Ende auf. Das Rückschlagventil 35 ist als in der Öffnung 39 angeordneter Einsatz ausgebildet. Das Rückschlagventil 35 weist einen Träger 53 auf. Das Rückschlagventil 35 weist eine Ventilsitzplatte 54 auf. Das Rückschlagventil 35 weist Sperrkörper, wie 55, auf. Das Rückschlagventil 35 weist ein Anschlagelement 56 für die Sperrkörper 55 auf. Das Rückschlagventil 35 weist einen Filter 57 auf.

Der Träger 53 weist eine hülsenartige Form auf. Der Träger 53 ist ein Kunststoffteil. Axial innenseitig weist der Träger 53 Rasthaken, wie 58, auf. Der Träger 53 ist mit seinen Rasthaken 58 an einem korrespondierenden Hinterschnittabschnitt des Hülsenteils 31 verrastet und damit axial fixiert. Der Hinterschnittabschnitt des Hülsenteils 31 ist als Ringnut ausgeführt. Der Träger 53 weist einen Außendurchmesser auf, der einem lokalen Innendurchmesser des Längskanals 38 entspricht und ist damit in radialer Richtung fixiert.

Die Ventilsitzplatte 54 weist eine kreisscheibenartige Form auf. Die Ventilsitzplatte 54 ist an dem axial innenseitigen Ende des Trägers 53 angeordnet. Die Ventilsitzplatte 54 ist axial zwischen dem Träger 53 und einem Absatz des Hülsenteils 31 fixiert. Die Ventilsitzplatte 55 weist einen Außendurchmesser auf, der einem lokalen Innendurchmesser des Längskanals 38 entspricht und ist damit in radialer Richtung fixiert. Die Ventilsitzplatte 55 weist auf einem Lochkreis gleichmäßig verteilt angeordnete kreisförmige Durchlässe auf. Die Durchlässe weisen jeweils einen zum axial außenseitigen Ende hin gebogenen Rand auf.

Jedem Durchlass der Ventilsitzplatte 54 ist ein Sperrkörper, wie 55 zugeordnet. Die Sperrkörper 55 sind Kugeln. Die Durchlässe mit ihren gebogenen Rändern sind den Sperrkörpern 55 geometrisch angepasst ausgeführt. Die Ränder der Durchlässe bilden jeweils einen Sitz für die Sperrkörper 55.

Das Anschlagelement 56 weist eine hutartige Form mit einem Krempenabschnitt auf. Das Anschlagelement 56 ist an der Ventilsitzplatte 54 radial innerhalb der Durchlässe angeordnet. Das Anschlagelement 56 ist mit der Ventilsitzplatte 54 fest verbunden. Der Krempenabschnitt des Anschlagelements 56 umgreift die Sperrkörper 55 von radial innen. Der Krempenabschnitt des Anschlagelements 56 ist axial von der Ventilsitzplatte 54 derart beabstandet angeordnet, dass die Sperrkörper 55 zwischen eine Sperrlage, in der die Sperrkörper 55 die Durchlässe verschließen, und einer Freigabelage, in der die Sperrkörper 55 die Durchlässe freigeben, verlagert werden können und dabei sicher gehalten sind. Eine Verlagerung der Sperrkörper 55 erfolgt bei einem Betrieb des Hydraulikventils 30 mithilfe eines Fluids.

Der Filter 57 weist eine haubenartige Form auf. Der Filter 57 ist an dem axial außenseitigen Ende des Rückschlagventils 35 angeordnet. Damit ist der Filter 57 der Öffnung 39 vorgeschaltet. In axialer Richtung steht das Rückschlagventil 35 mit seinem Träger 53 über das Hülsenteil 31 über und bildet damit einen Abschnitt einer Außenkontur des Hydraulikventils 30.

### Bezugszeichen

- 1: Stator
- 2: Antriebsrad
- 3: Statorgrundkörper
- 4: Stege
- 5: Zwischenräume
- 6: Flügel
- 7: Rotornabe
- 8: Rotor
- 9: Druckkammer
- 10: Druckkammer
- 11: Kanal
- 13: Kanal
- 14: Schwenkmotorversteller
- 16: Hohlrohr
- 18: Nockenwelle
- 22: Zentralachse

- 30: Hydraulikventil
- 31: Hülsenteil
- 32: Hohlkolben
- 33: Abstützelement
- 34: Feder
- 35: Rückschlagventil
- 36: Längsachse
- 37: Stellglied
- 38: Längskanal
- 39: Öffnung
- 40: Querkanal
- 41: Querkanal
- 42: Querkanal
- 43: Längskanal
- 44: Öffnung
- 45: Querkanal
- 46: Ringraum
- 47: Ringraum
- 48: Steuerkante
- 49: Steuerkante
- 50: Steuerkante
- 51: Druckfläche
- 52: Druckfläche
- 53: Träger
- 54: Ventilsitzplatte
- 55: Sperrkörper
- 56: Anschlagelement
- 57: Filter
- 58: Rasthaken

## Patentansprüche

1. Hydraulikventil (30) für einen Schwenkmotorversteller (14), das Hydraulikventil (30) aufweisend ein Hülsenteil (31) mit einem Längskanal (38), an dessen einem Ende ein Druckmittelanschluss (P) angeordnet ist, und von dem Längskanal (38) abgehenden Hydraulikanschlüssen (T, A, B) und einen innerhalb des Längskanals (38) axialverschiebbar angeordneten druckausgeglichenen Hohlkolben (32), wobei das Hydraulikventil (30) an dem Druckmittelanschluss (P) ein Rückschlagventil (35) aufweist, wobei das Rückschlagventil (35) einen hülsenförmigen Träger (53), eine Ventilsitzplatte (54) und wenigstens einen zwischen einer Offenstellung und einer Schließstellung verlagerbaren Sperrkörper (55) aufweist und wobei die Ventilsitzplatte mehrere Durchlässe aufweist, die mithilfe des wenigstens einen Sperrkörpers (55) in der Schließstellung schließbar sind.

2. Hydraulikventil (30) nach Anspruch 1, **dadurch gekennzeichnet, dass** das Rückschlagventil (35) in einer Einlassrichtung öffnend und in einer Auslassrichtung schließend ist.

3. Hydraulikventil (30) nach wenigstens einem der vorhergehenden Ansprüche, **dadurch gekennzeichnet, dass** das Rückschlagventil (35) als an dem druckmittelanschlussseitigen Ende des Längskanals (38) angeordneter Einsatz ausgebildet ist.

4. Hydraulikventil (30) nach wenigstens einem der vorhergehenden Ansprüche, **dadurch gekennzeichnet, dass** der wenigstens eine Sperrkörper (55) eine kugelartige Form aufweist.

5. Hydraulikventil nach wenigstens einem der Ansprüche 1 bis 3, **dadurch gekennzeichnet, dass** der wenigstens eine Sperrkörper eine scheibenartige Form aufweist.

6. Hydraulikventil (30) nach wenigstens einem der vorhergehenden Ansprüche, **dadurch gekennzeichnet, dass** das Rückschlagventil (35) einen Anschlag (56) für den wenigstens einen Sperrkörper (55) in Offenstellung aufweisen.

7. Hydraulikventil (30) nach Anspruch 6, **dadurch gekennzeichnet, dass** der Anschlag (56) an der Ventilsitzplatte (54) angeordnet ist.

8. Hydraulikventil nach Anspruch 6, **dadurch gekennzeichnet, dass** der Anschlag mithilfe eines hülsenteilseitigen Vorsprungs gebildet ist.

9. Hydraulikventil (30) nach wenigstens einem der vorhergehenden Ansprüche, **dadurch gekennzeichnet, dass** an dem Rückschlagventil (35) ein Filter (57) angeordnet ist.

10. Hydraulikventil (30) nach wenigstens einem der vorhergehenden Ansprüche, **dadurch gekennzeichnet, dass** das Rückschlagventil (35) mit dem Hülsenteil (31) formschlüssig verbunden ist.

11. Schwenkmotorversteller (14) mit einem Stator (1) und einem relativ zu dem Stator (1) zwischen einer ersten Endlage und einer zweiten Endlage verdrehbaren Rotor (8) zum Verstellen einer Nockenwelle (18) einer Brennkraftmaschine, **dadurch gekennzeichnet, dass** der Schwenkmotorversteller (14) zum Steuern einer Verdrehung des Rotors (8) ein Hydraulikventil (30) nach wenigsten einem der vorhergehenden Ansprüche aufweist.

## Claims

1. Hydraulic valve (30) for a pivoting motor adjuster (14), the hydraulic valve (30) having a sleeve part (31) with a longitudinal channel (38), at the one end of which a pressure medium connector (P) is arranged, and hydraulic connectors (T, A, B) which emanate from the longitudinal channel (38), and a pressure-equalized hollow piston (32) which is arranged axially displaceably within the longitudinal channel (38), the hydraulic valve (30) having a check valve (35) at the pressure medium connector (P), the check valve (35) having a sleeve-shaped carrier (53), a valve seat plate (54) and at least one shut-off body (55) which can be moved between an open position and a closed position, and the valve seat plate having a plurality of passages which can be closed in the closed position with the aid of the at least one shut-off body (55).

2. Hydraulic valve (30) according to Claim 1, **characterized in that** the check valve (35) opens in an inlet direction and closes in an outlet direction.

3. Hydraulic valve (30) according to at least one of the preceding claims, **characterized in that** the check valve (35) is configured as an insert which is arranged at that end of the longitudinal channel (38) on the pressure medium connector side.

4. Hydraulic valve (30) according to at least one of the preceding claims, **characterized in that** the at least one shut-off body (55) has a spherical shape.

5. Hydraulic valve according to at least one of Claims 1 to 3, **characterized in that** the at least one shut-off body has a disc-like shape.

6. Hydraulic valve (30) according to at least one of the preceding claims, **characterized in that** the check valve (35) has a stop (56) for the at least one shut-off body (55) in the open position.

7. Hydraulic valve (30) according to Claim 6, **characterized in that** the stop (56) is arranged on the valve seat plate (54).

8. Hydraulic valve according to Claim 6, **characterized in that** the stop is formed with the aid of a projection on the sleeve part side.

9. Hydraulic valve (30) according to at least one of the preceding claims, **characterized in that** a filter (57) is arranged at the check valve (35).

10. Hydraulic valve (30) according to at least one of the preceding claims, **characterized in that** the check valve (35) is connected to the sleeve part (31) in a positively locking manner.

11. Pivoting motor adjuster (14) having a stator (1) and a rotor (8) which can be rotated relative to the stator (1) between a first end position and a second end position for adjusting a camshaft (18) of an internal combustion engine, **characterized in that** the pivoting motor adjuster (14) has a hydraulic valve (30) according to at least one of the preceding claims for controlling a rotation of the rotor (8).

## Revendications

1. Vanne de commande hydraulique (30) pour un déphaseur à palettes (14), la vanne de commande hydraulique (30) présentant une partie de douille (31) avec un canal longitudinal (38), à une extrémité duquel est disposé un raccord de fluide sous pression (P), et des raccords hydrauliques (T, A, B) partant du canal longitudinal (38), et un piston creux (32) à pression équilibrée disposé de façon déplaçable axialement à l'intérieur du canal longitudinal (38), dans laquelle la vanne de commande hydraulique (30) présente au raccord de fluide sous pression (P) un clapet antiretour (35), dans laquelle le clapet antiretour (35) présente un support en forme de douille (53), une plaque de siège de soupape (54) et au moins un corps d'arrêt (55) déplaçable entre une position d'ouverture et une position de fermeture et dans laquelle la plaque de siège de soupape présente plusieurs passages, qui peuvent être fermés dans la position de fermeture à l'aide dudit au moins un corps d'arrêt (55).

2. Vanne de commande hydraulique (30) selon la revendication 1, **caractérisée en ce que** le clapet antiretour (35) s'ouvre dans une direction d'admission et se ferme dans une direction d'échappement.

3. Vanne de commande hydraulique (30) selon au moins une des revendications précédentes, **caractérisée en ce que** le clapet antiretour (35) est réalisé sous la forme d'un insert disposé à l'extrémité du canal longitudinal (38) portant le raccord de fluide sous pression.

4. Vanne de commande hydraulique (30) selon au moins une des revendications précédentes, **caractérisée en ce que** ledit au moins corps d'arrêt (55) présente une forme sphérique.

5. Vanne de commande hydraulique (30) selon au moins une des revendications 1 à 3, **caractérisée en ce que** ledit au moins un corps d'arrêt présente une forme de disque.

6. Vanne de commande hydraulique (30) selon au moins une des revendications précédentes, **caractérisée en ce que** le clapet antiretour (35) présente une butée (56) pour ledit au moins un corps d'arrêt (55) en position d'ouverture.

7. Vanne de commande hydraulique (30) selon la revendication 6, **caractérisée en ce que** la butée (56) est disposée sur la plaque de siège de soupape (54).

8. Vanne de commande hydraulique selon la revendication 6, **caractérisée en ce que** la butée est formée à l'aide d'une saillie formée sur la partie de douille.

9. Vanne de commande hydraulique (30) selon au moins une des revendications précédentes, **caractérisée en ce qu'**un filtre (57) est disposé sur le clapet antiretour (35).

10. Vanne de commande hydraulique (30) selon au moins une des revendications précédentes, **caractérisée en ce que** le clapet antiretour (35) est assemblé par emboîtement à la partie de douille (31).

11. Déphaseur à palettes (14) avec un stator (1) et un rotor (8) pouvant tourner par rapport au stator (1) entre une première position finale et une seconde position finale pour le déplacement d'un arbre à cames (18) d'un moteur à combustion interne, **caractérisé en ce que** le déphaseur à palettes (14) présente pour la commande d'une rotation du rotor (8) une vanne de commande hydraulique (30) selon au moins une des revendications précédentes.
